# EUROPÄISCHE PATENTSCHRIFT

(11) **EP 3 926 117 B1**
(45) Veröffentlichungstag und Bekanntmachung des Hinweises auf die Patenterteilung: **19.02.2025**
(21) Anmeldenummer: 21178515.9
(22) Anmeldetag: 09.06.2021
(51) Int. Cl.: E04B 1/76, B23B 49/02, E04F 13/08

(54) **WÄRMEDÄMMVERBUNDSYSTEM, FASSADE MIT DEM WÄRMEDÄMMVERBUNDSYSTEM SOWIE VERFAHREN ZUR ERRICHTUNG DESSELBEN**
THERMAL INSULATION COMPOSITE SYSTEM, FACADE WITH THE THERMAL INSULATION COMPOSITE SYSTEMAND METHOD FOR ERECTING THE SAME
SYSTÈME COMPOSITE D'ISOLATION THERMIQUE, FAÇADE POURVUE DE SYSTÈME COMPOSITE D'ISOLATION THERMIQUE, AINSI QUE SON PROCÉDÉ DE CONSTRUCTION

(30) Priorität: 18.06.2020 DE 202020103522 U
(43) Veröffentlichungstag der Anmeldung: 22.12.2021
(60) Teilanmeldung: 24220605.0
(73) Patentinhaber: Sopro Bauchemie GmbH, 65203 Wiesbaden (DE)
(72) Erfinder: Sommer, Mario, 65594 Runkel (DE)
(74) Vertreter: Diehl & Partner

(56) Entgegenhaltungen:
- EP-A2- 2 182 125
- WO-A1-2012/143035
- DE-U1- 29 920 332
- US-A1- 2005 278 934

## Beschreibung

Das vorliegende Dokument betrifft ein Wärmedämmverbundsystem, eine Fassade mit dem Wärmedämmverbundsystem, ein Verfahren zur Errichtung des Wärmedämmverbundsystems.

Es ist erforderlich, die Hülle eines Gebäudes (im Folgenden Gebäudehülle) gegen Witterungseinflüsse zu schützen. Weiter muss die Gebäudehülle auch gesetzlichen Anforderungen an die Wärmedämmung (und ggf. auch Schalldämmung) genügen. Schließlich sollte die Gebäudehülle zumindest in dem auch als Fassade bezeichneten sichtbaren Teil zudem ästhetischen Anforderungen genügen.

Traditionell wird die Gebäudehülle von einem Verblendmauerwerk oder einer Putzschicht gebildet. Bei moderneren Gebäuden werden zunehmend Vorhangfassaden nach DIN EN 13830 (2003-11), vorgehängte hinterlüftete Fassaden nach DIN 18516-1 und Wärmedämmverbundsysteme nach DIN 55699 verwendet.

Das vorliegende Dokument betrifft Wärmedämmverbundsysteme. Bei einem Wärmedämmverbundsystem ist das meist als massive Mauer ausgeführte Tragwerk vollflächig mit einem Dämmstoff versehen. Der Dämmstoff kann beispielsweise aus pflanzlichen, tierischen oder mineralischen Fasern, mineralischen Schäumen oder geschäumten Kunststoffen bestehen. Der Dämmstoff wird dann von einer außenliegenden (Fassaden-)Bekleidung gegen Witterungseinflüsse und Beschädigungen geschützt. Dabei ist die Bekleidung direkt ohne Spalt benachbart zum Dämmstoff angebracht. Bei Wärmedämmverbundsystemen wird für die Bekleidung im Stand der Technik meist ein Putz verwendet, der mehrschichtig ausgeführt und auch angestrichen sein kann. Dabei wird die Bekleidung bei herkömmlichen Wärmedämmverbundsystemen in der Regel vom Dämmstoff getragen, so dass die Bekleidung in der Regel nicht selbsttragend ist.

Anders als Wärmedämmverbundsysteme weisen Vorhangfassaden und vorgehängte hinterlüftete Fassaden in der Regel ein von der eigentlichen Bekleidung (und insbesondere von einem Putz und oder Armierungsgewebe) unterschiedliches Trägersystem auf, welches häufig in Form einer Lattung und/oder in Form von Halteprofilen ausgebildet ist. Dieses Trägersystem, welches in der Regel über die ganze Fassade horizontal und/oder vertikal durchgehend ausgebildet ist, ist entweder selbsttragend oder wird ganz oder teilweise vom Tragwerk getragen. Das Trägersystem trägt dann die eigentliche Bekleidung. Eine solche herkömmliche *"vorgehängte Fassadenverkleidung"* ist aus den Dokumenten EP 2 182 125 A2 und WO 2012/143035 A1 bekannt. Aus der WO 2012/143035 A1 ist auch ein Verstärkungselement zum Bilden einer festen Unterlage für ein Montageorgan auf einer Wärmedämmung bekannt. Von dem Verstärkungselement werden über eine Montagekonsole Befestigungsprofile getragen, welche die von der Wärmedämmung beabstandete Bekleidung tragen. Dieses über die ganze Fassade horizontal und/oder vertikal durchgehend ausgebildete Trägersystem fehlt bei herkömmlichen Wärmedämmverbundsystemen. Bei herkömmlichen Wärmedämmverbundsystemen wird die Bekleidung ohne zusätzliches Trägersystem über den Dämmstoff vom Tragwerk getragen.

Aus dem Dokument DE 299 20 332 U1 ist eine Befestigungsvorrichtung bekannt, welche es erlaubt, ein Bauteil (wie beispielsweise eine Rankkonsole, eine Markise, ein Vordach oder eine Lampe) an einer Fassade mit Wärmedämmverbundsystem zu befestigen.

Bei dem vorstehenden Wärmedämmverbundsystem muss sichergestellt sein, dass sich auch bei hohen Windlasten keine Komponenten des Systems vom Tragwerk lösen und herabfallen können. Ein weiteres Problem ist, dass der Dämmstoff in Abhängigkeit von seiner Dicke und dem verwendeten Material an seiner dem Tragwerk abgewandten Seiten häufig nur ein geringes Tragvermögen aufweist. Entsprechend wird die Dicke der Bekleidung häufig so gering gewählt, dass die Bekleidung gerade noch vom Dämmstoff getragen werden kann, was aber mit einer geringen Druckfestigkeit der Bekleidung einhergeht.

Alternativ ist es auch bekannt, die Dicke der Bekleidung so groß zu wählen, dass die Bekleidung selbsttragend ist, was jedoch mit erheblichem Materialeinsatz und damit Kosten verbunden ist. Weiter muss die Dicke der Bekleidung dann jeweils an die Gebäudehöhe angepasst werden. Ein Beispiel für eine derartige selbsttragende Bekleidung ist eine vor den Dämmstoff gesetzte Wand aus Klinker.

Dokument US 2005/0278934 A1 offenbart ein Hilfsmittel zum Einbringen von schiefen Bohrungen unter einem definierten Winkel.

Entsprechend bedürfen Wärmedämmverbundsysteme häufig einer baurechtlichen Zulassung.

Ausgehend hiervon ist es Aufgabe der vorliegenden Erfindung, ein Wärmedämmverbundsystem sowie ein Verfahren zur Errichtung desselben bereitzustellen, welche es ermöglichen, mit geringem Materialeinsatz eine statisch selbsttragende Bekleidung bereitzustellen. Weiter ist es Aufgabe der vorliegenden Erfindung, ein Wärmedämmverbundsystem und Verfahren zur Errichtung desselben bereitzustellen, welche es erlauben, die Bekleidung des Systems variabel und insbesondere keramisch zu belegen.

Die vorstehenden Aufgaben werden durch die Kombination der Merkmale der unabhängigen Ansprüche gelöst. Bevorzugte Weiterbildungen finden sich in den abhängigen Ansprüchen. Die vorliegende Erfindung betrifft ein Wärmedämmverbundsystem mit den Merkmalen des Anspruchs 1 und ein Verfahren zur Herstellung einer Fassade mit den Merkmalen des Anspruchs 11.

Gemäß Ausführungsformen weist ein Wärmedämmverbundsystem einen (beliebigen) Dämmstoff, eine (Fassaden-)Bekleidung und Befestigungsmittel auf. Die Befestigungsmittel sind dazu ausgebildet, die Bekleidung so an einem Tragwerk eines Gebäudes zu befestigen, dass der Dämmstoff zwischen der Bekleidung und dem Tragwerk an einer Außenseite des Gebäudes angeordnet ist. Das Tragwerk selber ist kein Teil des Wärmedämmverbundsystems. Die Befestigungsmittel umfassen Anker von einem ersten Typ. Diese Bezeichnung wurde gewählt, um die Anker vom ersten Typ von nachfolgend eingeführten Ankern von einem zweiten Typ unterscheiden zu können. Jeder Anker vom ersten Typ umfasst einen (optional genau einen) starren ersten Grundkörper und zwei (optional genau zwei) gerade (sich jeweils über ihre ganze Länge entlang einer Geraden erstreckende) Stäbe. In nicht zusammengebautem Zustand sind der erste Grundkörper und die beiden Stäbe getrennte Bauteile. In diesem Zusammenhang wird unter einem *"starren"* Grundkörper ein Körper verstanden, der sich nicht verformt, wenn Kräfte auf ihn einwirken, wie sie bei bestimmungsgemäßer Verwendung zu erwarten sind. Bei größeren Kräften, als sie bei bestimmungsgemäßer Verwendung zu erwarten sind, soll eine plastische und/oder elastische Verformung des Körpers aber möglich sein. Der erste Grundkörper weist in einem ersten Abschnitt eine erste Öffnung auf, die einem ersten Stab der beiden Stäbe zugeordnet ist. Weiter weist der erste Grundkörper in einem vom ersten Abschnitt verschiedenen zweiten Abschnitt eine zweite Öffnung auf, die einem zweiten Stab der beiden Stäbe zugeordnet ist. Dabei schließen Flächennormalen auf den ersten Abschnitt und den zweiten Abschnitt des ersten Grundkörpers miteinander einen Winkel von zwischen 10° und 30° oder von zwischen 15° und 25° oder von 20° ein. Um die Flächennormalen bestimmen zu können, ist der erste Grundkörper in dem ersten und zweiten Abschnitt zumindest in der Umgebung der ersten und zweiten Öffnung jeweils eben. Der erste Grundkörper kann auch im ganzen ersten und zweiten Abschnitt jeweils eben sein. Der erste Grundkörper weist mithin im Querschnitt einen abgewinkelten Verlauf auf. Die Kanten, um welche der Grundkörper abgewinkelt ist, können zueinander parallel sein. Die ersten und zweiten Abschnitte des ersten Grundkörpers definieren so jeweils Ebenen, die sich unter Einschluss eines Winkels von zwischen 10° und 30° oder von zwischen 15° und 25° oder von 20° schneiden. Der erste Stab und der zweite Stab des Ankers vom ersten Typ können identisch oder unterschiedlich ausgestaltet sein. Da die den beiden Stäben jeweils zugeordneten ersten und zweiten Öffnungen in Abschnitten des ersten Grundkörpers ausgebildet sind, welche miteinander einen vorgegebenen konstanten Winkel einschließen, schließen auch die beiden Stäbe in montiertem Zustand miteinander einen vorgegebenen konstanten Winkel ein. Dies erlaubt es, mittels des Ankers vom ersten Typ in unterschiedliche Richtungen wirkende Kräfte definiert abzuleiten. In der Folge ist eine von den Befestigungsmitteln gehaltene Bekleidung in sich (und damit unabhängig von ihrer Höhe und unabhängig von einem verwendeten Dämmstoff) statisch selbsttragend (ohne dass hierfür ein Beitrag des Dämmstoffs erforderlich ist). Da sich somit jeder Quadratmeter Bekleidungsfläche unabhängig von der umgebenden Bekleidungsfläche und unabhängig vom Dämmstoff selber trägt, können beliebig große Bekleidungsflächen bereitgestellt werden, ohne dass eine statische Neubewertung erforderlich ist. Weiter ist es somit nicht erforderlich, die Bekleidung an eine Tragfähigkeit des verwendeten Dämmstoffes anzupassen, und umgekehrt. In der Folge kann der zu verwendende Dämmstoff beliebig gewählt werden. Selbst in einem Fall, in dem die Tragfähigkeit des Dämmstoffes mit der Zeit abnimmt (z.B. da der Dämmstoff von Kleintieren partiell entfernt wird oder degeneriert), hat dies keine negativen Auswirkungen auf die selbsttragende Eigenschaft der Bekleidung.

Erfindungsgemäß weist der Anker vom ersten Typ weiter einen starren zweiten Grundkörper mit einer Öffnung auf, die dem ersten Stab zugeordnet ist. Dieser zweite Grundkörper legt eine einzige Ebene oder zueinander parallele Ebenen fest und ist somit nicht abgewinkelt, sondern insgesamt eben. Bei dem zweiten Grundkörper kann es sich im einfachsten Fall um eine Platte oder Scheibe oder flache Schüssel mit einem (optional mittigen) Loch handeln. Im Falle einer Schüssel legen der Boden der Schüssel und der Rand der Schüssel jeweils parallele Ebenen fest.

Gemäß einer Ausführungsform umfassen die Befestigungsmittel weiter Anker von einem zweiten Typ, wobei jeder Anker vom zweiten Typ einen (optional genau einen) starren dritten Grundkörper und einen (optional genau einen) geraden dritten Stab umfasst. Der dritte Grundkörper weist eine Öffnung auf, die dem dritten Stab zugeordnet ist. Dieser dritte Grundkörper legt eine Ebene oder zueinander parallele Ebenen fest und ist somit nicht abgewinkelt, sondern eben. Bei dem dritten Grundkörper kann es sich im einfachsten Fall um eine Platte oder Scheibe oder flache Schüssel mit einem (optional mittigen) Loch handeln. Gegenüber einer ausschließlichen Verwendung von Ankern vom ersten Typ weist eine gleichzeitige Verwendung von sowohl Ankern vom ersten Typ als auch Ankern vom zweiten Typ den Vorteil auf, dass die Anker vom zweiten Typ einfacher am Tragwerk eines Gebäudes befestigt werden können, da sie mit nur einem (dritten) Stab auskommen. Allerdings können die Anker vom zweiten Typ vor allem in Erstreckungsrichtung der zugehörigen dritten Stäbe wirkende Kräfte aufnehmen. Quer zur Erstreckungsrichtung der dritten Stäbe wirkende Kräfte können nur in dem Umfang aufgenommen werden, wie es das Tragvermögen der dritten Stäbe bezogen auf die jeweilige Länge der dritten Stäbe zulässt. Optional ist der dritte Stab des Ankers vom zweiten Typ baugleich zu dem ersten und/oder zweiten Stab des Ankers vom ersten Typ. Er kann sich aber auch von dem ersten und/oder zweiten Stab unterscheiden.

Gemäß einer Ausführungsform sind die Stäbe der Anker vom ersten Typ und/oder sind die Stäbe der Anker vom zweiten Typ starr.

Gemäß einer Ausführungsform umfassen die Befestigungsmittel pro Quadratmeter Bekleidungsfläche Anker vom ersten Typ und Anker vom zweiten Typ in einem Verhältnis, bei dem für jeden Anker vom ersten Typ zwischen zwei und acht Anker vom zweiten Typ oder für jeden Anker vom ersten Typ zwischen drei und fünf Anker vom zweiten Typ oder für jeden Anker vom ersten Typ vier Anker vom zweiten Typ vorhanden sind. Ein solches Verhältnis erlaubt es, die typischerweise auf einen Quadratmeter Bekleidungsfläche wirkenden Kräfte in einem solchen Maß an das Tragwerk abzuführen, dass die Bekleidungsfläche statisch selbsttragend ist, und gleichzeitig sicherzustellen, dass die Bekleidung über ihre ganze Fläche ausreichend druckstabil ist.

Gemäß einer Ausführungsform bestehen die ersten, zweiten und dritten Grundkörper der Anker vom ersten und/oder zweiten Typ aus Blech oder aus tiefgezogenem Blech. Derartige Grundkörper können kostengünstig aus unterschiedlichsten Blechen wie Weißblech, verzinktem Blech oder Edelstahlblech hergestellt werden. Durch Wahl des Materials und/oder der Dicke des Blechs und/oder das Einbringen von Sicken und/oder Randabstellungen im Rahmen eines Tiefziehvorgangs kann die Festigkeit des jeweiligen Grundkörpers so eingestellt werden, dass der Grundkörper sich bei der Einwirkung von Kräften, wie sie bei bestimmungsgemäßer Verwendung zu erwarten sind, wie ein starrer Körper verhält.

Gemäß einer Ausführungsform sind die ersten, zweiten und dritten Grundkörper der Anker vom ersten und/oder zweiten Typ kraftschlüssig mit den durch die jeweiligen Öffnungen geführten Stäben verbindbar. Dies kann beispielsweise durch Verschrauben, Verklemmen oder Verschweißen erfolgen. Es ist auch möglich, die Stäbe mit einem Schnappverbinder zu versehen, auf den die Öffnung eines jeweiligen Ankers aufgesteckt werden kann und der nach Aufstecken des Ankers elastisch verriegelt.

Gemäß einer Ausführungsform umfasst die Bekleidung ein Armierungsgewebe, welches kraftschlüssig mit den Ankern vom ersten und zweiten Typ verbindbar ist. Die Verwendung eines Armierungsgewebes erhöht die Flächenstabilität einer Bekleidung beträchtlich. Wenn das Armierungsgewebe zudem kraftschlüssig mit den Ankern verbunden ist, wird das Erstellen einer statisch selbsttragenden Bekleidung auch bei geringer Stärke der Bekleidung erheblich erleichtert.

Gemäß einer Ausführungsform umfassen die Befestigungsmittel weiter Unterlegscheiben und Schrauben oder Muttern. Die Unterlegscheiben und Schrauben oder Muttern können aus Kunststoff oder Metall und insbesondere aus Edelstahl gebildet sein. Dabei ist ein Durchmesser der Unterlegscheiben jeweils größer als eine Maschenweite des Armierungsgewebes. Vorzugsweise beträgt ein Durchmesser der Unterlegscheiben jeweils wenigstens das Zehnfache oder wenigstens das Fünffache einer Maschenweite des Armierungsgewebes. Gemäß einer Ausführungsform ist ein Durchmesser der Unterlegscheiben jedoch kleiner als ein Durchmesser der zweiten und/oder dritten Grundkörper. Weiter ist jeweils eine Unterlegscheibe mittels einer Schraube oder Mutter so an einem Anker befestigbar, dass das Armierungsgewebe zwischen dem zweiten bzw. dritten Grundkörper des jeweiligen Ankers und der Unterlegscheibe angeordnet ist. Dabei kann die Schraube oder Mutter direkt mit dem Anker verschraubt werden. Alternativ kann die Schraube oder Mutter mit einem dem Anker zugehörigen Stab verschraubt und die Unterlegscheibe so indirekt mit dem Anker verbunden werden. Alternativ zu der Befestigung der Unterlegscheibe mittels Schraube oder Mutter am Anker kann die Unterlegscheibe auch mittels einer am Anker oder an einem dem Anker zugehörigen Stab ausgebildeten Schnappverbindung am Anker oder dem Stab befestigt werden.

Gemäß einer Ausführungsform ist das Armierungsgewebe aus Glasfasern oder Kohlefasern gebildet. Derartige Fasern erlauben bezogen auf ihr Gewicht eine hohe Zugbelastung. Gemäß einer Ausführungsform weist das Armierungsgewebe eine Maschenweite von zwischen 1 mm mal 1 mm und 40 mm mal 40 mm und insbesondere von zwischen 2 mm mal 2 mm und 20 mm mal 20 mm und weiter insbesondere von zwischen 3 mm mal 3 mm und 10 mm mal 10 mm auf. Alternativ kann als Armierungsgewebe auch ein Vliesstoff verwendet werden.

Gemäß einer Ausführungsform umfasst die Bekleidung neben dem Armierungsgewebe weiter einen Armierungsmörtel, in den das Armierungsgewebe einbettbar ist. Dabei beträgt eine Schichtdicke des Armierungsmörtels zwischen 5 mm und 30 mm oder zwischen 10 mm und 25 mm oder zwischen 15 mm und 20 mm. Das Armierungsgewebe ist bevorzugt mittig in den Armierungsmörtel eingebettet.

Gemäß einer Ausführungsform kann die Bekleidung dann weiter einen keramischen Belag umfassen, der nach einem Aushärten des Armierungsmörtels so mit diesem verklebbar ist, dass der Armierungsmörtel zwischen dem keramischen Belag und dem Dämmstoff angeordnet ist. Die Verwendung eines keramischen Belags ist möglich, da die Bekleidung eine statisch selbsttragende Fläche vor dem Dämmstoff bildet, die von den Ankern zuverlässig gehaltert wird.

Gemäß einer Ausführungsform ist das Wärmedämmverbundsystem frei von einem über die Anker vom ersten und/oder zweiten Typ sowie den Dämmstoff hinausgehenden zusätzlichen Trägersystem für das Armierungsgewebe und den Armierungsmörtel.

Gemäß einer Ausführungsform sind die (ersten, zweiten und/oder dritten) Stäbe Gewindestangen. Gemäß einer Ausführungsform sind die Gewindestangen mit Dübeln verschraubbar, die in Bohrungen im Tragwerk angeordnet sind. Gemäß einer Ausführungsform sind die Dübel und/oder Stäbe zur Vermeidung von Kältebrücken aus Kunststoff gebildet. Gemäß einer alternativen Ausführungsform sind die Dübel und/oder Stäbe aus Metall und insbesondere aus Edelstahl gebildet. Gemäß einer Ausführungsform weisen die Stäbe zur Vermeidung von Kältebrücken mit den Stäben verschraubte Hülsen aus Kunststoff mit zwei voneinander durch eine Kunststoffwand getrennten miteinander fluchtenden Innengewinden auf.

Gemäß einer Ausführungsform sind die ersten, zweiten und/oder dritten Stäbe mit Ausnahme eines möglichen Gewindes rotationssymmetrisch.

Gemäß einer Ausführungsform besteht der Dämmstoff aus pflanzlichen, tierischen oder mineralischen Fasern, mineralischen Schäumen oder geschäumten Kunststoffen.

Bei einer Fassade mit einem Wärmedämmverbundsystem wie vorstehend beschrieben ist gemäß Ausführungsformen der Dämmstoff mit einem Tragwerk verklebt. Weiter ist pro Quadratmeter Fassadenfläche eine Gruppe Anker vom zweiten Typ entlang der Umfangslinie eines Kreises oder eines Vielecks oder eines regelmäßigen Vielecks oder eines regelmäßigen konvexen Vielecks angeordnet und kraftschlüssig mit dem Tragwerk verbunden. Gemäß einer Ausführungsform umfasst die Gruppe Anker vom zweiten Typ zwischen zwei und acht Anker. Sind nur zwei Anker vom zweiten Typ vorgesehen, sind diese entlang einer Geraden angeordnet. Schließlich ist pro Quadratmeter Fassadenfläche ein Anker vom ersten Typ im Flächenschwerpunkt des Kreises oder des Vielecks, entlang dessen Umfangslinie die Anker vom zweiten Typ angeordnet sind, angeordnet und kraftschlüssig mit dem Tragwerk verbunden. Sind nur zwei Anker vom zweiten Typ vorgesehen, ist der Anker vom ersten Typ mittig zwischen den Ankern vom zweiten Typ entlang einer die Anker vom zweiten Typ verbindenden Geraden angeordnet.

Gemäß einer Ausführungsform sind bei der vorstehenden Fassade zueinander benachbarte Anker vom zweiten Typ in horizontaler Richtung um einen regelmäßigen Abstand von zwischen 20 cm und 80 cm oder um einen regelmäßigen Abstand von zwischen 40 cm und 60 cm oder um einen regelmäßigen Abstand von 50 cm beabstandet. Gemäß einer Ausführungsform sind bei der vorstehenden Fassade zueinander benachbarte Anker vom zweiten Typ in vertikaler Richtung um einen regelmäßigen Abstand von zwischen 20 cm und 80 cm oder um einen regelmäßigen Abstand von zwischen 40 cm und 60 cm oder um einen regelmäßigen Abstand von 50 cm beabstandet.

Gemäß einer Ausführungsform sind bei der vorstehenden Fassade zueinander benachbarte Anker vom ersten Typ in horizontaler Richtung um einen regelmäßigen Abstand von zwischen 70 cm und 130 cm oder um einen regelmäßigen Abstand von zwischen 90 cm und 110 cm oder um einen regelmäßigen Abstand von 100 cm beabstandet. Gemäß einer Ausführungsform sind bei der vorstehenden Fassade zueinander benachbarte Anker vom ersten Typ in vertikaler Richtung um einen regelmäßigen Abstand von zwischen 70 cm und 130 cm oder um einen regelmäßigen Abstand von zwischen 90 cm und 110 cm oder um einen regelmäßigen Abstand von 100 cm beabstandet.

Ein Hilfsmittel, welches zur Erstellung einer Fassade mit einem Wärmedämmverbundsystem verwendet werden kann, weist eine Platte mit einer ersten Flachseite und einer der ersten Flachseite gegenüber liegenden zweiten Flachseite auf. Das Hilfsmittel ist nicht Teil des beanspruchten Gegenstandes.

Die Platte weist zwei voneinander beabstandete erste und zweite Öffnungen auf, welche sich zwischen der ersten und zweiten Flachseite erstrecken und die Platte somit jeweils in Dickenrichtung durchdringen. Bei den Öffnungen kann es sich beispielsweise um Bohrungen handeln. Auf der ersten Flachseite weist die Platte einen ersten Hohlstab auf, dessen Öffnung mit der ersten Öffnung fluchtet. Dabei schließt der erste Hohlstab mit der ersten Flachseite einen rechten Winkel ein. Auf der zweiten Flachseite weist die Platte einen zweiten Hohlstab auf, dessen Öffnung mit der zweiten Öffnung fluchtet. Dabei schließt der zweite Hohlstab mit der zweiten Flachseite einen kleinsten Winkel von zwischen 60° und 80° oder von 70° ein.

Wird das Hilfsmittel zur Herstellung einer Fassade wie vorstehend beschrieben verwendet, ist ein freier Durchmesser der ersten und zweiten Hohlstäbe maximal 10 % größer oder gleich einem Außendurchmesser der Stäbe, die mit den Ankern vom ersten Typ verbunden sind.

Gemäß einer Ausführungsform des Hilfsmittels beträgt eine Länge des ersten Hohlstabes zwischen 0,5 cm und 2 cm und beträgt eine Länge des zweiten Hohlstabes zwischen 5 cm und 15 cm oder zwischen 8 cm und 12 cm oder 10 cm. Somit beträgt eine Länge des zweiten Hohlstabes ein Mehrfaches der Länge des ersten Hohlstabes.

Gemäß einer Ausführungsform des Hilfsmittels beträgt ein Abstand zwischen der ersten Öffnung und der zweiten Öffnung zwischen 5 mm und 30 mm oder zwischen 10 mm und 20 mm. Wird das Hilfsmittel zur Herstellung einer Fassade wie vorstehend beschrieben verwendet, ist ein Abstand zwischen der ersten Öffnung und der zweiten Öffnung in der Platte des Hilfsmittels gleich dem Abstand zwischen der ersten Öffnung und der zweiten Öffnung der ersten Grundplatte des Ankers vom ersten Typ.

Gemäß einer Ausführungsform des Hilfsmittels schneiden sich von dem ersten Hohlstab und dem zweiten Hohlstab festgelegte Geraden.

Ausführungsformen eines Verfahrens zur Herstellung einer Fassade wie vorstehend beschrieben unter Verwendung des vorstehend beschriebenen Hilfsmittels weisen die folgenden Schritte auf:
Verkleben eines (beliebigen) Dämmstoffs mit einem Tragwerk. Setzen von zwischen zwei und acht Bohrungen erster Art pro Quadratmeter durch den Dämmstoff in das Tragwerk, wobei die Bohrungen erster Art senkrecht zum Tragwerk orientiert sind und entlang der Umfangslinie eines Kreises oder Vielecks oder regelmäßigen Vielecks oder regelmäßigen konvexen Vielecks angeordnet sind; sind nur Bohrungen erster Art vorgesehen, so sind diese entlang einer Geraden angeordnet. Setzen einer Bohrung zweiter Art pro Quadratmeter durch den Dämmstoff in das Tragwerk, wobei die Bohrung zweiter Art jeweils senkrecht zum Tragwerk orientiert ist und im Bereich des Flächenschwerpunkts des Kreises oder Vielecks angeordnet ist, entlang dessen Umfangslinie die Bohrungen erster Art angeordnet sind; sind nur zwei Bohrungen erster Art vorgesehen, so ist die Bohrung zweiter Art mittig zwischen den Bohrungen erster Art entlang einer die Bohrungen erster Art verbindenden Geraden angeordnet. Verschrauben von geraden Stäben in den Bohrungen erster und zweiter Art im Tragwerk. Gemäß einer Ausführungsform wird zuvor in den Bohrungen im Tragwerk ein geeigneter Dübel angeordnet. Aufstecken des ersten Hohlstabes des Hilfsmittels über dem in der Bohrung zweiter Art verschraubten Stab in einer Art und Weise, dass die zweite Öffnung mit dem zweiten Hohlstab vertikal unterhalb oder oberhalb der ersten Öffnung mit dem ersten Hohlstab angeordnet und der zweite Hohlstab auf der dem Dämmstoff abgewandten Flachseite des Hilfsmittels angeordnet ist. Setzen einer Bohrung dritter Art pro Quadratmeter durch den Dämmstoff in das Tragwerk unter Verwendung des zweiten Hohlstabes des Hilfsmittels als Führung für einen Bohrer so, dass die Bohrung mit dem Tragwerk einen kleinsten Winkel von zwischen 60° und 80° oder von 70° einschließt. Verschrauben von geraden Stäben in den Bohrungen dritter Art im Tragwerk. Gemäß einer Ausführungsform wird zuvor in den Bohrungen im Tragwerk ein geeigneter Dübel angeordnet. Kraftschlüssiges Verbinden der ersten Grundkörper mit den Stäben, welche den Bohrungen zweiter und dritter Art zugeordnet sind. Gemäß einer Ausführungsform erfolgt dieses kraftschlüssige Verbinden durch Verschrauben oder durch Verschweißen oder durch eine Schnappverbindung. Aufbringen einer ersten Schicht Armierungsmörtel auf den Dämmstoff, wobei die Schichtdicke der ersten Schicht wenigstens 5 mm beträgt. In dieser Ausführungsform sind Dämmstoff und Armierungsmörtel somit so aneinander angepasst, dass der Dämmstoff die erste Schicht Armierungsmörtel tragen kann. Anordnen eines Armierungsgewebes benachbart zu dem noch frischen Armierungsmörtel und kraftschlüssiges Befestigen des Armierungsgewebes an den Ankern vom ersten Typ und den Ankern vom zweiten Typ. Gemäß einer Ausführungsform erfolgt dieses kraftschlüssige Befestigen durch Verschrauben oder durch Verschweißen oder durch eine Schnappverbindung. Gemäß einer Ausführungsform erfolgt dieses kraftschlüssige Befestigen unter Verwendung von zweiten und dritten Grundkörpern und von Unterlegscheiben, wobei das Armierungsgewebe zwischen den zweiten und dritten Grundkörpern und jeweils einer Unterlegscheibe angeordnet ist. Dann ist der Durchmesser der Unterlegscheibe jeweils größer als eine Maschenweite des Armierungsgewebes und an einen Durchmesser des zweiten und dritten Grundkörpers angepasst. Aufbringen einer zweiten Schicht Armierungsmörtel auf das Armierungsgewebe und die noch frische erste Schicht Armierungsmörtel, wobei die Schichtdicke der zweiten Schicht wenigstens 5 mm beträgt. Auf diese Weise wird das Armierungsgewebe in den Armierungsmörtel eingebettet.

Gemäß einer Ausführungsform umfasst das Verfahren weiter ein Verkleben eines keramischen Belags mit der zweiten Schicht Armierungsmörtel nach dem Aushärten des Armierungsmörtels. Gemäß einer alternativen Ausführungsform umfasst das Verfahren weiter ein Verkleben eines Belags aus Holz, Naturstein, Kunststein, Metallblech oder Glas mit der zweiten Schicht Armierungsmörtel nach dem Aushärten des Armierungsmörtels.

Gemäß einer Ausführungsform erfolgt anschließend ein Verfugen des Belags.

Ausführungsformen der Erfindung werden nachfolgend anhand von Figuren näher erläutert. Hierbei zeigt
- Figur 1: schematisch einen Querschnitt durch eine Fassade mit einem Wärmedämmverbundsystem gemäß einer Ausführungsform der vorliegenden Erfindung;
- Figur 2: schematisch eine Aufsicht auf einem im Wärmedämmverbundsystem von Figur 1 verwendeten ersten Grundkörper;
- Figur 3: schematisch eine Seitenansicht und eine Aufsicht auf einen im Wärmedämmverbundsystem von Figur 1 verwendeten Abstandshalter;
- Figur 4: schematisch eine Aufsicht auf einem im Wärmedämmverbundsystem von Figur 1 verwendeten zweiten und dritten Grundkörper;
- Figur 5: schematisch eine Darstellung der zur Erstellung der Fassade aus Figur 1 gesetzten Bohrungen;
- Figur 6: schematisch eine teilweise freigeschnittene perspektivische Ansicht der Fassade aus Figur 1;
- Figur 7: schematisch eine teilweise freigeschnittene perspektivische Ansicht eines bei der Herstellung der Fassade aus Figur 1 verwendeten ersten Hilfsmittels; und
- Figur 8: schematisch eine teilweise freigeschnittene perspektivische Ansicht eines bei der Herstellung der Fassade aus Figur 1 verwendeten zweiten Hilfsmittels.

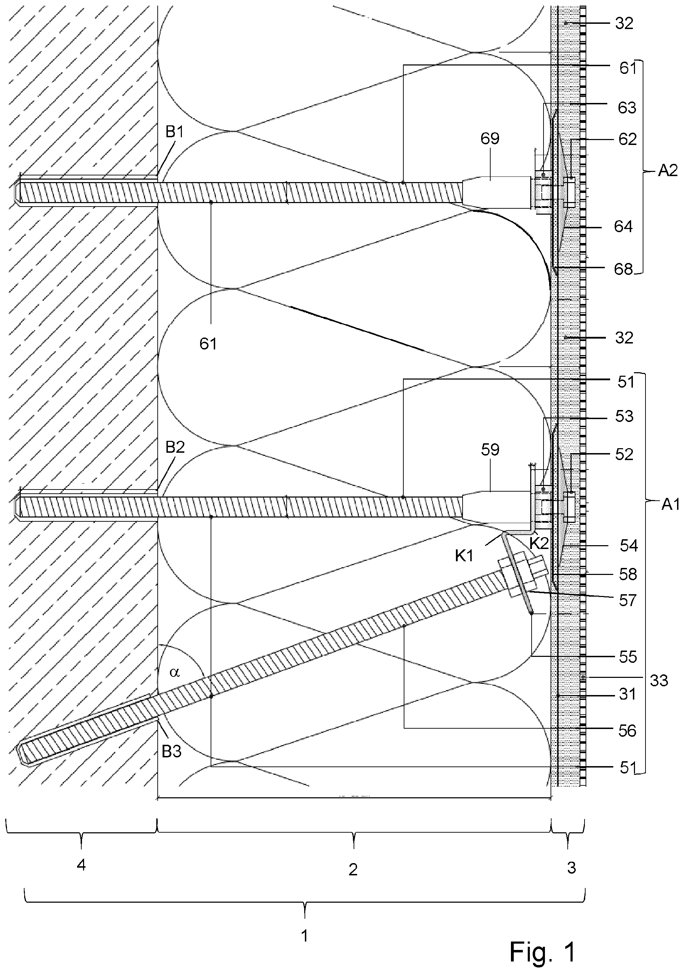

Im Folgenden werden unter Bezugnahme auf Figuren 1 bis 4 der Aufbau einer Fassade mit einem Wärmedämmverbundsystem gemäß einer Ausführungsform der vorliegenden Erfindung und die dabei verwendeten Komponenten erläutert.

Wie aus dem in Figur 1 gezeigten Querschnitt ersichtlich ist, besteht die Fassade 1 aus mit einem Tragwerk 4 verklebten Dämmstoff 2 und einer (Fassaden-) Bekleidung 3, welche von Ankern A1, A2 gehaltert wird.

In dem in der Figur gezeigten Beispiel handelt es sich bei dem Tragwerk 4 um eine massive Außenwand eines Gebäudes aus Beton und bei dem Dämmstoff 2 um einen Block aus Mineralwolle. Die Stärke des Dämmstoffes 2 und damit der Abstand zwischen der Bekleidung 3 und dem Tragwerk 4 beträgt 20 cm. Die Stärke und Art des verwendeten Dämmstoffes 3 ist für die erfindungsgemäße Bekleidung jedoch von untergeordneter Bedeutung, so dass ein beliebiger Dämmstoff mit beliebiger Stärke verwendet werden kann.

In der gezeigten Ausführungsform werden zwei unterschiedliche Arten von Anker, nämlich Anker von einem ersten Typ A1 und Anker von einem zweiten Typ A2 verwendet, um die Bekleidung statisch selbsttragend auszubilden.

Die Anker vom ersten Typ A1 zeichnen sich dadurch aus, dass sie erste und zweite Stäben 51 und 56 aufweisen, die kraftschlüssig über einen starren ersten Grundkörper 55 verbunden sind.

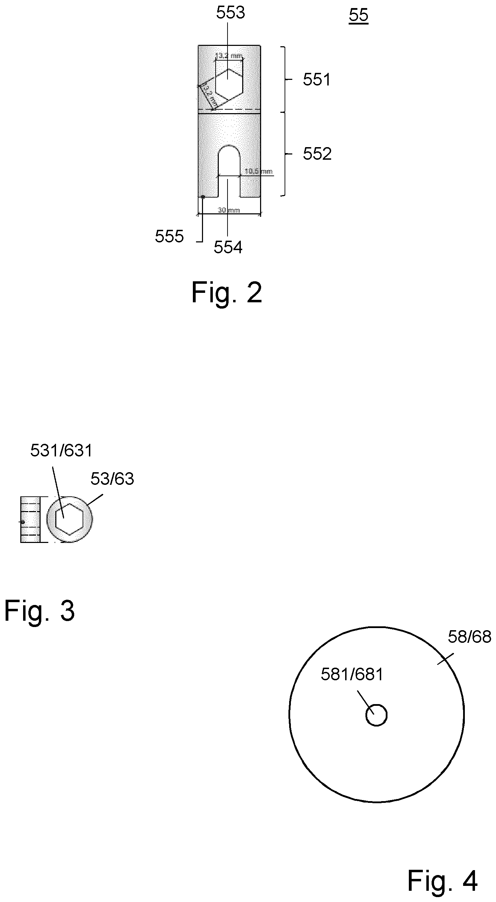

Der starre erste Grundkörper 55, bei welchem es sich in der gezeigten Ausführungsform um einen länglichen Streifen aus Edelstahlblech mit einer Stärke von 2 mm handelt, ist in Figur 2 in Aufsicht gezeigt. Wie sich aus einer Zusammenschau der Figuren 1 und 2 ergibt, ist der starre erste Grundkörper 55 entlang zweier voneinander beabstandeter und zueinander paralleler Biegekanten K1, K2 gefaltet. Die Biegekanten legen so zwei Abschnitte 551 und 552 fest, innerhalb derer der erste Grundkörper 55 jeweils eben ist. Beide Abschnitte 551, 552 weisen jeweils Öffnungen 553, 554 auf. In der gezeigten Ausführungsform weist eine erste Öffnung 553 im ersten Abschnitt 551 einen hexagonalen Öffnungsquerschnitt auf und ist somit in Umfangsrichtung geschlossen, wohingegen eine zweite Öffnung 554 im zweiten Abschnitt 552 eine zu einer Stirnseite 555 des ersten Grundkörpers 55 offene Aussparung ist. Flächennormalen auf den ersten und zweiten Abschnitt 551, 552 des ersten Grundkörpers 55 schließen miteinander in der gezeigten Ausführungsform einen Winkel von 20° ein. Weiter sind die ersten und zweiten Öffnungen 553, 554 in der gezeigten Ausführungsform so im ersten Grundkörper 55 angeordnet, dass sich Flächennormalen auf den ersten und zweiten Abschnitt 551, 552 im Bereich der ersten und zweiten Öffnungen 553, 554 schneiden.

Ein Werkzeugangriff einer nachfolgen näher erläuterte Kunststoffhülse 59 des ersten Stabes 51 durchsetzt die erste Öffnung 553 im ersten Abschnitt 551 des ersten Grundkörpers 55 so, dass der erste Stab 51 auf den ersten Abschnitt 551 senkrecht steht. Entsprechend durchsetzt der zweite Stab 56 die zweite Öffnung 554 im zweiten Abschnitt 552 des ersten Grundkörpers 55 so, dass der zweite Stab 56 auf den zweiten Abschnitt 552 senkrecht steht. Aufgrund der mehrfachen Faltung des ersten Grundkörpers 55 schließen dann auch die beiden ersten und zweiten Stäbe 51, 56 miteinander einen Winkel von 20° ein.

Der erste Stab 51 ist so in einer Bohrung B2 mit dem Tragwerk 4 verschraubt, dass er senkrecht zum Tragwerk 4 orientiert ist. Der zweite Stab 56 ist entsprechend so in einer Bohrung B3 mit dem Tragwerk 4 verschraubt, dass er mit dem Tragwerk 4 einen Winkel α von 70° einschließt. Zusammen mit dem Tragwerk 4 und dem ersten Grundkörper 55 bilden die ersten und zweiten Stäbe 51, 56 des Ankers vom ersten Typ A1 so ein Dreieck, welches dazu in der Lage ist, sowohl senkrecht zum Tragwerk 4 auf den ersten Grundkörper 55 wirkende Kräfte als auch in vertikaler Richtung von Figur 1 auf den ersten Grundkörper 55 wirkende Kräfte abzuführen.

In der gezeigten Ausführungsform handelt es sich bei den ersten und zweiten Stäben 51, 56 jeweils um Gewindestangen aus rostfreiem Stahl mit einem Außendurchmesser von 10 mm, die über in Bohrungen B2, B3 im Tragwerk 4 eingesetzte (in Figur 1 nicht gezeigte) Dübel mit dem Tragwerk 4 verbunden sind. In Figur 1 dringen die ersten und zweiten Stäbe 51, 56 jeweils 7 cm in das Tragwerk 4 ein.

Zur Vermeidung einer Kältebrücke trägt der erste Stab 51 in der gezeigten Ausführungsform an seinem nicht mit dem Tragwerk 4 verbundenen Ende eine zylindrische Kunststoffhülse 59, die zwei voneinander durch eine Kunststoffwand getrennte miteinander fluchtende Innengewinde aufweist. Eines der Innengewinde ist auf den ersten Stab 51 aufgeschraubt. Hierfür weist die Kunststoffhülse 59 einen das andere Innengewinde umgebenden Werkzeugangriff mit hexagonalem Querschnitt auf. Dieser Werkzeugangriff durchsetzt die erste Öffnung 553 im ersten Abschnitt 551 des ersten Grundkörpers 55.

Stäbe mit derartigen Kunststoffhülsen können unter der Bezeichnung Abstandssystem *"Thermax"* (geschütztes Warenzeichen) 12/16 von der Firma fischerwerke GmbH & Co. KG, Klaus-Fischer-Straße 1, 72178 Waldachtal, Deutschland bezogen werden.

Nach dem Einsetzen des ersten Grundkörpers 55 auf den Werkzeugangriff der mit dem ersten Stab 51 verschraubten Kunststoffhülse 59 wird auf den Werkzeugangriff der in Figur 3 links in Seitenansicht und rechts in Aufsicht gezeigte Abstandshalter 53 aufgesetzt, der entsprechend ebenfalls eine Öffnung 531 mit hexagonalem Querschnitt aufweist. Der Abstandshalter 53 trägt einen in Figur 4 in Aufsicht gezeigten zweiten Grundkörper 58 aus 1 mm starkem Edelstahlblech mit einer mittig angeordneten Öffnung 581 in Form einer Bohrung. Der zweite Grundkörper 58 weist die Form einer flachen starren schüsselförmigen Scheibe mit einem 4 mm hohen Rand auf.

Die Länge der ersten und zweiten Stäbe 51, 56 ist so an die Materialstärke des Dämmstoffs 2 angepasst, dass der erste Grundkörper 55 in den Dämmstoff 2 eingebettet ist, und der zweite Grundkörper 58 drucklos bündig auf dem Dämmstoff 2 aufliegt.

Auf den Dämmstoff 2 ist eine erste Schicht / Lage Armierungsmörtel 32 mit einer Stärke von 5 mm angeordnet, welche ein Armierungsgewebe 31 trägt. In der gezeigten Ausführungsform handelt es sich bei dem Armierungsmörtel 32 um Sopro Renovier- und Ausgleichsmörtel *"RAM* 3" (geschütztes Warenzeichen) und bei dem Armierungsgewebe 31 um unter der Bezeichnung *"Sopro PanzerGewebe eXtra - PG-X 1188"* erhältliches Glasfasergewebe. Beide Produkte sind bei der Firma Sopro Bauchemie GmbH in 65102 Wiesbaden erhältlich. Anstelle eines Glasfasergewebes kann beispielsweise auch eine Kohlenstofffasermatte verwendet werden.

In das dem ersten Stab 51 abgewandte zweite Innengewinde der Kunststoffhülse 59 ist eine Edelstahlschraube 52 eingeschraubt, welche eine kappenförmige Unterlegscheibe 54 und das Armierungsgewebe 31 durchsetzt und so das Armierungsgewebe 31 zwischen dem zweiten Grundkörper 58 und der Unterlegscheibe 54 haltert. Ersichtlich sind die Durchmesser des zweiten Grundkörpers 58 und der Unterlegscheibe 54 erheblich größer als eine Maschenweite des Armierungsgewebes 31 und so aneinander angepasst, dass ein Durchmesser der Unterlegscheibe 54 kleiner als ein Durchmesser des zweiten Grundköpers 58 ist.

Das dem Tragwerk 4 abgewandte freie Ende des zweiten Stabes 56 ist in die zweite Öffnung 554 im ersten Grundkörper 55 eingesetzt und über zwei Muttern 57 kraftschlüssig mit dem Grundkörper 55 verbunden. Es ist zur Vermeidung von Kältebrücken optional jedoch möglich, auch hier eine Kunststoffhülse zu verwenden, wie sie beim ersten Stab 51 vorgesehen ist.

Die in Figur 1 gezeigte Fassade 1 weist weiter einen Anker von einem zweiten Typ A2 auf. Dieser unterscheidet sich vom Anker vom ersten Typ A1 dadurch, dass kein erster Grundkörper 55 und kein zweiter Stab 56 vorgesehen sind. Entsprechend weist der Anker vom zweiten Typ A2 einen dritten Stab 61 in Form einer Gewindestange auf, die über eine Bohrung B1 senkrecht 7 cm tief mit dem Tragwerk 4 verschraubt ist, und an ihrem freien Ende eine Kunststoffhülse trägt, wie sie auch beim ersten Stab 51 vorgesehen ist. Auch hier trägt die Kunststoffhülse über einen Abstandshalter 63 einen dritten Grundkörper 68 aus 1 mm starkem Edelstahlblech in Form einer flachen starren schüsselförmigen Scheibe mit einem 4 mm hohen Rand mit einer mittig angeordneten Öffnung 681 in Form einer Bohrung. Auch hier ist in das dem dritten Stab 61 abgewandte zweite Innengewinde der Kunststoffhülse eine Edelstahlschraube 62 eingeschraubt, welche eine kappenförmige Unterlegscheibe 64 und das Armierungsgewebe 31 durchsetzt und so das Armierungsgewebe 31 zwischen dem dritten Grundkörper 68 und der Unterlegscheibe 64 haltert. Der dritte Stab 61, die Kunststoffhülse, der Abstandshalter 63, der dritte Grundkörper 68, die Edelstahlschraube 62 und die Unterlegscheibe 64 sind identisch zum ersten Stab 51 mit der zugehörigen Kunststoffhülse, dem Abstandshalter 53, dem zweiten Grundkörper 58, der Edelstahlschraube 52 und der Unterlegscheibe 54 aufgebaut, so dass auf das vorstehend Gesagte verwiesen wird.

Auf das Armierungsgewebe 31 ist eine zweite Schicht / Lage Armierungsmörtel 32 mit einer Stärke von 15 mm angeordnet, in welche die Edelstahlschrauben 52, 62 und die kappenförmige Unterlegscheiben 54, 64 eingebettet sind und welche über einen (nicht gezeigten) Fliesenkleber einen keramischen Belag 33 in Form von Fliesen trägt.

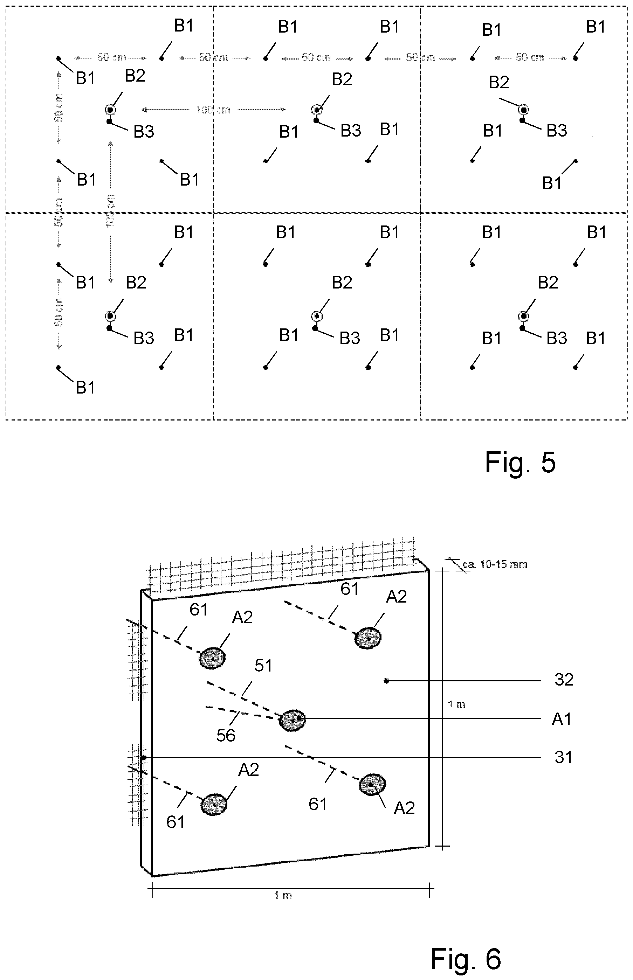

Im Folgenden werden unter Bezugnahme auf Figuren 5 bis 8 ein Verfahren zur Herstellung einer Fassade wie vorstehend beschrieben und dabei verwendete Hilfsmittel erläutert.

Zunächst wird ein beliebiger Dämmstoff 3 mit dem Tragwerk 4 verklebt.

Anschließend sind Anker für die (Fassaden-)Bekleidung zu setzen. Um eine statisch selbsttragende Bekleidung 3 zu erreichen, ist es wichtig, dass pro Quadratmeter Fassadenfläche für jeden Anker vom ersten Typ A1 zwischen zwei und acht Anker vom zweiten Typ A2 vorhanden sind. Das benötigte Verhältnis hängt insbesondere von der konkreten Ausgestaltung der Bekleidung und damit von der Frage ab, ob die Bekleidung beispielsweise einen keramischen Belag tragen soll, oder nicht. Die Tragfähigkeit des Dämmstoffs spielt allenfalls eine untergeordnete Rolle. In der hier beschriebenen Ausführungsformhaben sich vier Anker vom zweiten Typ A2 pro Anker vom ersten Typ A1 als ausreichend erwiesen.

Figur 5 stellt die zur Erstellung der Fassade aus Figur 1 nach einem Verkleben des Dämmstoffs 3 mit dem Tragwerk 4 gesetzten Bohrungen schematisch dar. Dabei bezeichnen die quadratischen Kästchen in gestrichelten Linien jeweils einen Quadratmeter Fassadenfläche.

Zunächst werden in der gezeigten Ausführungsform pro Quadratmeter Fassadenfläche vier Bohrungen erster Art B1 in den Dämmstoff 3 und das Tragwerk 4 eingebracht. Diese Bohrungen sind jeweils in den Ecken eines Quadrats mit einer Kantenlänge von 50 cm angeordnet.

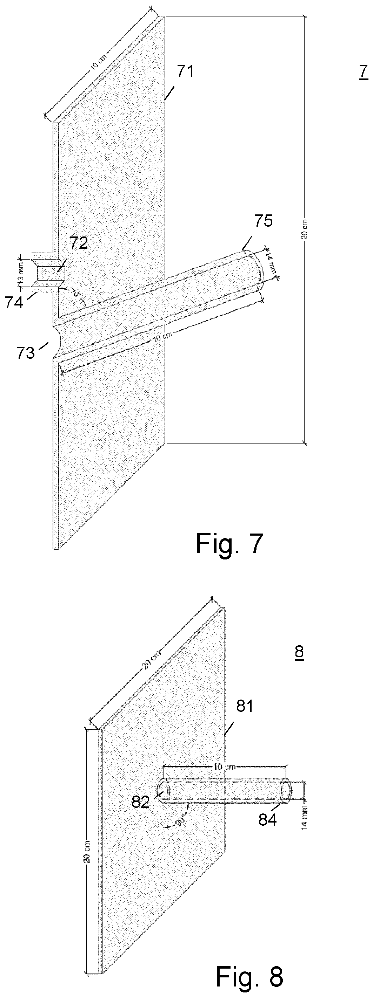

Um diese Bohrungen erster Art B1 senkrecht zum Tragwerk 4 zu setzen, kann man sich des in Figur 8 gezeigten Hilfsmittels 8 bedienen. Das Hilfsmittel 8 besteht aus einer ebenen quadratischen Platte 81 mit einer Seitenlänge von 20 cm, welche eine mittige Durchdringung 82 aufweist. Senkrecht zur Platte 81 ist ein Hohlstab 84 vorgesehen, dessen Öffnung mit der Durchdringung 82 in der Platte 81 fluchtet. Platte 81 und Hohlstab 82 sind aus Metall gebildet. Die Platte 81 des Hilfsmittels 8 wird an der gewünschten Position flach auf den Dämmstoff 3 aufgelegt. Anschließend kann der Hohlstab 82 als Führung für einen (nicht gezeigten) Bohrer verwendet werden.

Im Flächenschwerpunkt des von den Bohrungen erster Art B1 festgelegten Quadrats wird anschließend jeweils eine Bohrung zweiter Art B2 gesetzt. Die Bohrungen zweiter Art B2 sind dann in den Ecken von Quadraten mit einer Seitenlänge von 100 cm angeordnet. Da die Bohrungen zweiter Art B2 ebenfalls senkrecht zum Tragwerk 4 orientiert sein sollen, kann man sich hierfür wiederum des Hilfsmittels 8 bedienen.

Anschließend werden die ersten und dritten Stäbe 51, 61 mit dem Tragwerk 4 verschraubt, wofür in das Tragwerk 4 zunächst Dübel eingesetzt werden können. Dabei tragen die ersten und dritten Stäbe 51, 61 an ihrem freien Ende jeweils eine Kunststoffhülse 59, 69 mit einem hexagonalen Werkzeugangriff.

Um nun die für die zweiten Stäbe 56 der Anker erster Art A1 benötigte Bohrungen dritter Art B3 zu setzen, kann man sich des in Figur 7 gezeigten weiteren Hilfsmittels 7 bedienen.

Das weitere Hilfsmittel 7 besteht aus einer ebenen rechteckigen Platte 71, die zwei gegenüberliegende zueinander parallele erste und zweite Flachseiten aufweist. Die Platte 71 weist zwei voneinander um 20 mm beabstandete erste und zweite Öffnungen 72, 73 auf. Auf der ersten Flachseite weist die Platte 71 einen 10 mm langen ersten Hohlstab 74 auf, dessen Öffnung mit der ersten Öffnung 72 fluchtet. Auf der gegenüberliegenden zweiten Flachseite weist die Platte 71 einen 10 cm langen zweiten Hohlstab 75 auf, dessen Öffnung mit der zweiten Öffnung 73 fluchtet. Dabei sind der erste Hohlstab 74 und der zweite Hohlstab 75 so orientiert, dass der erste Hohlstab 74 mit der ersten Flachseite einen rechten Winkel einschließt, und der zweite Hohlstab 75 mit der zweiten Flachseite einen kleinsten Winkel von 70° einschließt und sich von dem ersten und dem zweiten Hohlstab 74, 75 festgelegte Geraden schneiden. Ein freier Querschnitt des ersten Hohlstabes 74 ist an den Werkzeugangriff der Kunststoffhülse angepasst.

Der erste Hohlstab 74 des weiteren Hilfsmittels 8 wird so auf den Werkzeugangriff der mit dem ersten Stab 51 verschraubten Kunststoffhülse 59 aufgesteckt, dass die Platte 71 flach auf dem Dämmstoff 3 aufliegt und der zweite Hohlstab 74 vertikal über oder unterhalb der ersten Öffnung 72 angeordnet ist. Anschließend kann der zweite Hohlstab 74 als Führung für einen (nicht gezeigten) Bohrer verwendet werden. Infolge der Führung des Bohrers schließen die Bohrungen dritter Art B3 mit dem Tragwerk 4 ebenfalls einen kleinsten Winkel von 70° ein.

Anschließend werden die zweiten Stäbe 56 mit dem Tragwerk 4 verschraubt, wofür in das Tragwerk 4 zunächst Dübel eingesetzt werden können.

Nun kann die erste Öffnung 553 des ersten Grundkörpers 55 so auf den Werkzeugangriff der mit dem ersten Stab 51 verschraubten Kunststoffhülse aufgeschoben werden, dass der zweite Stab 56 in der zweiten Öffnung 554 des ersten Grundkörpers 55 angeordnet ist. Anschließend kann der erste Grundkörper 55 mittels der Muttern 57 kraftschlüssig mit dem zweiten Stab 56 verbunden werden.

Anschließend werden auf die Werkzeugangriffe der mit dem ersten und dritten Stab 51, 61 verschraubten Kunststoffhülsen 59, 69 Abstandshalter 53, 63 aufgesteckt und wird eine erste Schicht Armierungsmörtel 32 mit einer Schichtdicke von 5 mm auf den Dämmstoff 2 aufgebracht.

Nun werden die zweiten und dritten Grundkörper 58, 68 und ein Armierungsgewebe 31 benachbart zur noch frischen ersten Schicht Armierungsmörtel 32 angeordnet.

Das Armierungsgewebe 31 wird mittels der Schrauben 52, 62 und Unterlegscheiben 54, 64 kraftschlüssig über die Kunststoffhülsen 59, 69 an den Ankern vom ersten und zweiten Typ A1, A2 befestigt, bevor auf die noch frische erste Schicht Armierungsmörtel 32 eine zweite Schicht Armierungsmörtel 32 mit einer Schichtdicke von 10 mm so aufgebracht wird, dass die Schrauben 52, 62 und Unterlegscheiben 54, 64 vollständig in den Armierungsmörtel 32 eingebettet sind. Dies ist schematisch in Figur 6 gezeigt.

Nach dem Aushärten des Armierungsmörtels 32 ist die so gebildete (Fassaden-) Bekleidung 1 statisch selbsttragend, und kann mittels eines geeigneten Fliesenklebers (nicht gezeigt) mit einem keramischen Belag 33 belegt werden. Ein geeigneter Fliesenkleber kann unter der Bezeichnung *"megaFlex TX - MEG* 667" von der Firma Sopro Bauchemie GmbH in 65102 Wiesbaden bezogen werden.

## Patentansprüche

1. Wärmedämmverbundsystem (1), aufweisend:
einen Dämmstoff (2),
eine Bekleidung (3) und
Befestigungsmittel (41-47, 51-54),
wobei die Befestigungsmittel (51-58, 61-68) dazu ausgebildet sind, die Bekleidung (3) so an einem Tragwerk (4) eines Gebäudes zu befestigen, dass der Dämmstoff (2) zwischen der Bekleidung (3) und dem Tragwerk (4) außen am Gebäude angeordnet ist,
wobei die Befestigungsmittel (51-58, 61-68) Anker von einem ersten Typ (A1) umfassen,
wobei jeder Anker vom ersten Typ (A1) einen starren ersten Grundkörper (55) und zwei gerade Stäbe (51, 56) umfasst,
wobei der erste Grundkörper (55) in einem ebenen ersten Abschnitt (551) eine erste Öffnung (553) aufweist, die einem ersten Stab (51) der beiden Stäbe (51, 56) zugeordnet ist,
wobei der erste Grundkörper (55) in einem ebenen zweiten Abschnitt (552) eine zweite Öffnung (554) aufweist, die einem zweiten Stab (56) der beiden Stäbe (51, 56) zugeordnet ist, und wobei Flächennormalen auf den ebenen ersten Abschnitt (551) und den ebenen zweiten Abschnitt (552) des ersten Grundkörpers (55) miteinander einen Winkel von zwischen 10° und 30° oder von zwischen 15° und 25° oder von 20° einschließen, so dass der Grundkörper (55) im Querschnitt einen abgewinkelten Verlauf aufweist,
wobei der Anker vom ersten Typ (A1) weiter einen starren zweiten Grundkörper (58) aufweist, wobei der zweite Grundkörper (58) eben ist und eine Öffnung (581) aufweist, die dem ersten Stab (51) zugeordnet ist.

2. Wärmedämmverbundsystem (1) nach Anspruch 1,
wobei die Befestigungsmittel (51-58, 61-68) Anker von einem zweiten Typ (A2) umfassen,
wobei jeder Anker des zweiten Typs (A2) einen starren dritten Grundkörper (68) und einen geraden dritten Stab (61) umfasst, und
wobei der dritte Grundkörper (68) eben ist und eine Öffnung (681) aufweist, die dem dritten Stab (61) zugeordnet ist.

3. Wärmedämmverbundsystem (1) nach Anspruch 1 oder 2, wobei die Befestigungsmittel (51-58, 61-68) pro Quadratmeter Bekleidungsfläche Anker vom ersten Typ (A1) und Anker vom zweiten Typ (A2) in einem Verhältnis umfassen, dass für jeden Anker vom ersten Typ (A1) zwischen zwei und acht Anker vom zweiten Typ (A2) oder für jeden Anker vom ersten Typ (A1) zwischen drei und fünf Anker vom zweiten Typ (A2) oder für jeden Anker vom ersten Typ (A1) vier Anker vom zweiten Typ (A2) vorhanden sind.

4. Wärmedämmverbundsystem (1) nach einem der Ansprüche 1 bis 3, wobei die Grundkörper (55, 58, 68) der Anker vom ersten und/oder zweiten Typ (A1, A2) kraftschlüssig mit den durch die jeweiligen Öffnungen (553, 554, 581, 681) geführten Stäben (51, 56, 61) verbindbar sind .

5. Wärmedämmverbundsystem (1) nach einem der Ansprüche 1 bis 4,
wobei die Bekleidung (3) ein insbesondere aus Glasfasern oder Kohlefasern gebildetes Armierungsgewebe (31) umfasst,
wobei das Armierungsgewebe (31) kraftschlüssig mit den Ankern vom ersten und zweiten Typ (A1, A2) verbindbar ist.

6. Wärmedämmverbundsystem (1) nach Anspruch 5,
wobei die Befestigungsmittel (51-58, 61-68) weiter Unterlegscheiben (54, 64) und Schrauben oder Muttern (52, 62) umfassen,
wobei ein Durchmesser der Unterlegscheiben (54, 64) jeweils größer als eine Maschenweite des Armierungsgewebes (31) ist, und
wobei jeweils eine Unterlegscheibe (54, 64) mittels einer Schraube oder Mutter (52, 62) so an einem zugehörigen Anker (A1, A2) befestigbar ist, dass das Armierungsgewebe (31) zwischen Anker und Unterlegscheibe (54, 64) angeordnet ist.

7. Wärmedämmverbundsystem (1) nach Anspruch 5 oder 6,
wobei die Bekleidung weiter einen Armierungsmörtel (32) umfasst, wobei das Armierungsgewebe (31) in den Armierungsmörtel (32) eingebettet ist, und
wobei eine Schichtdicke des Armierungsmörtels (32) zwischen 5 mm und 30 mm oder zwischen 10 mm und 25 mm oder zwischen 15 mm und 20 mm beträgt.

8. Wärmedämmverbundsystem (1) nach Anspruch 7,
wobei die Bekleidung weiter einen keramischen Belag (33) umfasst, wobei der keramische Beleg (33) nach einem Aushärten des Armierungsmörtels (32) so mit diesem verklebt ist, dass der Armierungsmörtel (32) zwischen dem keramischen Belag (33) und dem Dämmstoff (2) angeordnet ist.

9. Fassade mit einem Wärmedämmverbundsystem (1) nach einem der Ansprüche 1 bis 8,
wobei der Dämmstoff (2) mit einem Tragwerk (4) verklebt ist,
wobei pro Quadratmeter Fassadenfläche eine Gruppe Anker vom zweiten Typ (A2) entlang der Umfangslinie eines Kreises oder Vielecks oder regelmäßigen Vielecks oder regelmäßigen konvexen Vielecks angeordnet und kraftschlüssig mit dem Tragwerk (4) verbunden ist, und
wobei pro Quadratmeter Fassadenfläche ein Anker vom ersten Typ (A1) im Flächenschwerpunkt des Kreises oder Vielecks, entlang dessen Umfangslinie die Anker vom zweiten Typ angeordnet sind, angeordnet und kraftschlüssig mit dem Tragwerk (4) verbunden ist.

10. Fassade nach Anspruch 9,
wobei zueinander benachbarte Anker vom zweiten Typ (A2) in horizontaler Richtung und/oder in vertikaler Richtung um einen Abstand von zwischen 20 cm und 80 cm oder um einen Abstand von zwischen 40 cm und 60 cm oder um einen Abstand von 50 cm beabstandet sind; und/oder
wobei zueinander benachbarte Anker vom ersten Typ (A1) in horizontaler Richtung und/oder in vertikaler Richtung um einen Abstand von zwischen 70 cm und 130 cm oder um einen Abstand von zwischen 90 cm und 110 cm oder um einen Abstand von 100 cm beabstandet sind.

11. Verfahren zur Herstellung einer Fassade nach einem der Ansprüche 9 oder 10 unter Verwendung eines Hilfsmittels (7) zur Erstellung einer Fassade, das Hilfsmittel (7) aufweisend:
eine Platte (71) mit einer ersten Flachseite und einer der ersten Flachseite gegenüberliegenden zweiten Flachseite,
wobei die Platte (71) zwei voneinander beabstandete erste und zweite Öffnungen (72, 73) aufweist, welche sich zwischen der ersten und zweiten Flachseite erstrecken,
wobei die Platte (71) auf der ersten Flachseite einen ersten Hohlstab (74) aufweist, dessen Öffnung mit der ersten Öffnung (72) fluchtet, und wobei die Platte (71) auf der zweiten Flachseite einen zweiten Hohlstab (75) aufweist, dessen Öffnung mit der zweiten Öffnung (73) fluchtet, wobei der erste Hohlstab (74) mit der ersten Flachseite einen rechten Winkel einschließt, und
wobei der zweite Hohlstab (75) mit der zweiten Flachseite einen kleinsten Winkel von zwischen 60° und 80° oder von 70° einschließt,
das Verfahren aufweisend die folgenden Schritte:
- Verkleben eines Dämmstoffs (2) mit einem Tragwerk (4);
- Setzen von zwischen zwei und acht Bohrungen erster Art (B1) pro Quadratmeter durch den Dämmstoff (2) in das Tragwerk (4), wobei die Bohrungen erster Art (B1) senkrecht zum Tragwerk (4) orientiert sind und entlang der Umfangslinie eines Kreises oder Vielecks oder regelmäßigen Vielecks oder regelmäßigen konvexen Vielecks angeordnet sind;
- Setzen einer Bohrung zweiter Art (B2) pro Quadratmeter durch den Dämmstoff (2) in das Tragwerk (4), wobei die Bohrung zweiter Art (B2) senkrecht zum Tragwerk (4) orientiert ist und im Bereich des Flächenschwerpunkts des Kreises oder Vielecks angeordnet ist, entlang dessen Umfangslinie die Bohrungen erster Art (B1) angeordnet sind;
- Verschrauben von geraden Stäben (51, 56, 61) in den Bohrungen erster und zweiter Art (B1, B2) im Tragwerk (4);
- Aufstecken des ersten Hohlstabes (74) des Hilfsmittels (7) über dem in der Bohrung zweiter Art (B2) verschraubten Stab (51) so, dass die zweite Öffnung (73) mit dem zweiten Hohlstab (75) vertikal unterhalb oder oberhalb der ersten Öffnung (72) mit dem ersten Hohlstab (74) angeordnet und der zweite Hohlstab (75) auf der dem Dämmstoff (2) abgewandten Flachseite des Hilfsmittels (7) angeordnet ist,
- Setzen einer Bohrung dritter Art (B3) pro Quadratmeter durch den Dämmstoff (2) in das Tragwerk (4) durch Verwendung des zweiten Hohlstabes (75) als Führung für einen Bohrer so, dass die Bohrung dritter Art (B3) mit dem Tragwerk (4) einen kleinsten Winkel von zwischen 60° und 80° oder von 70° einschließt;
- Verschrauben von geraden Stäben (56) in den Bohrungen dritter Art (B3) im Tragwerk (4);
- kraftschlüssiges Verbinden der ersten Grundkörper (55) mit den Stäben (51, 56), welche den Bohrungen zweiter und dritter Art (B2, B3) zugeordnet sind;
- Aufbringen einer ersten Schicht Armierungsmörtel (32) auf den Dämmstoff (2), wobei die Schichtdicke der ersten Schicht wenigstens 5 mm beträgt;
- Anordnen eines Armierungsgewebes (31) benachbart zu dem noch frischen Armierungsmörtel (32) und kraftschlüssiges Befestigen des Armierungsgewebes (31) an den Ankern vom ersten Typ (A1) unter Verwendung starrer zweiter Grundkörper (58), wobei die zweiten Grundkörper (58) eben sind und eine Öffnung (581) aufweisen, die dem ersten Stab (51) zugeordnet ist, und an den Ankern vom zweiten Typ (A2); und
- Aufbringen einer zweiten Schicht Armierungsmörtel (32) auf das Armierungsgewebe (31) und die noch frische erste Schicht Armierungsmörtel (32), wobei die Schichtdicke der zweiten Schicht wenigstens 5 mm beträgt.

12. Verfahren nach Anspruch 11, weiter umfassend ein Verkleben eines keramischen Belags (33) mit der zweiten Schicht Armierungsmörtel (32) nach dem Aushärten des Armierungsmörtels (32).

## Claims

1. Thermal insulation composite system (1), having:
insulating material (2),
a cladding (3) and
fastening means (41-47, 51-54),
wherein the fastening means (51-58, 61-68) are configured to fasten the cladding (3) to a supporting structure (4) of a building such that the insulating material (2) is arranged externally on the building between the cladding (3) and the supporting structure (4),
wherein the fastening means (51-58, 61-68) comprise anchors of a first type (A1),
wherein each anchor of the first type (A1) comprises a rigid first base body (55) and two straight rods (51, 56),
wherein the first base body (55) has, in a planar first portion (551), a first opening (553) which is allocated to a first rod (51) of the two rods (51, 56), wherein the first base body (55) has, in a planar second portion (552), a second opening (554) which is allocated to a second rod (56) of the two rods (51, 56), and wherein surface normals on the planar first portion (551) and the planar second portion (552) of the first base body (55) form an angle of between 10° and 30° or of between 15° and 25° or of 20° with one another, so that the base body (55) has an angled course in cross-section,
wherein the anchor of the first type (A1) further comprises a rigid second base body (58), wherein the second base body 958) is planar and has an opening (581) which is allocated to the first rod (51).

2. Thermal insulation composite system (1) as claimed in claim 1,
wherein the fastening means (51-58, 61-68) comprise anchors of a second type (A2),
wherein each anchor of the second type (A2) comprises a rigid third base body (68) and a straight third rod (61), and
wherein the third base body (68) is planar and has an opening (681) which is allocated to the third rod (61).

3. Thermal insulation composite system (1) as claimed in claim 1 or 2, wherein the fastening means (51-58, 61-68) comprise, per square meter of cladding surface, anchors of the first type (A1) and anchors of the second type (A2) in a ratio in which for each anchor of the first type (A1) there are between two and eight anchors of the second type (A2), or for each anchor of the first type (A1) there are between three and five anchors of the second type (A2), or for each anchor of the first type (A1) there are four anchors of the second type (A2).

4. Thermal insulation composite system (1) as claimed in any one of claims 1 to 3, wherein the base bodies (55, 58, 68) of the anchors of the first and/or second type (A1, A2) can be connected in a force-fitting manner to the rods (51, 56, 61) guided through the respective openings (553, 554, 581, 681).

5. Thermal insulation composite system (1) as claimed in any one of claims 1 to 4, wherein the cladding (3) comprises a reinforcement fabric (31) formed in particular from glass fibres or carbon fibres.
wherein the reinforcement fabric (31) can be connected in a force-fitting manner to the anchors of the first and second type (A1, A2).

6. Thermal insulation composite system (1) as claimed in claim 5,
wherein the fastening means (51-58, 61-68) further comprise washers (54, 64) and screws or nuts (52, 62),
wherein a diameter of the washers (54, 64) is in each case larger than a mesh width of the reinforcement fabric (31), and
wherein in each case a washer (54, 64) can be fastened to an associated anchor (A1, A2) by means of a screw or nut (52, 62) in such a way that the reinforcement fabric (31) is arranged between the anchor and washer (54, 64).

7. Thermal insulation composite system (1) as claimed in claim 5 or 6,
wherein the cladding further comprises a reinforcement mortar (32),
wherein the reinforcement fabric (31) is embedded into the reinforcement mortar (32), and
wherein a layer thickness of the reinforcement mortar (32) is between 5 mm and 30 mm or between 10 mm and 25 mm or between 15 mm and 20 mm.

8. Thermal insulation composite system (1) as claimed in claim 7,
wherein the cladding further comprises a ceramic covering (33),
wherein, after the reinforcement mortar (32) has hardened, the ceramic covering (33) can be bonded thereto in such a way that the reinforcement mortar (32) is arranged between the ceramic covering (33) and the insulating material (2).

9. Façade having a thermal insulation composite system (1) as claimed in any one of claims 1 to 8,
wherein the insulating material (2) is bonded to a supporting structure (4),
wherein a group of anchors of the second type (A2) is arranged per square meter of façade surface along the circumferential line of a circle or a polygon or a regular polygon or a regular convex polygon and is connected in a force-fitting manner to the supporting structure (4), and
wherein one anchor of the first type (A1) per square metre of façade surface is arranged in the centre of area of the circle or polygon, along the circumferential line of which the anchors of the second type are arranged, and is connected in a force-fitting manner to the supporting structure (4).

10. Façade as claimed in claim 9,
wherein mutually adjacent anchors of the second type (A2) are spaced apart in the horizontal direction and/or in the vertical direction by a distance of between 20 cm and 80 cm or by a distance of between 40 cm and 60 cm or by a distance of 50 cm; and/or
wherein mutually adjacent anchors of the first type (A1) are spaced apart in the horizontal direction and/or in the vertical direction by a distance of between 70 cm and 130 cm or by a distance of between 90 cm and 110 cm or by a distance of 100 cm.

11. Method for producing a façade as claimed in any one of claims 9 or 10 using auxiliary means (7) for creating a façade, the auxiliary means (7) comprising:
a plate (71) having a first flat side and a second flat side opposite the first flat side,
wherein the plate (71) has two first and second openings (72, 73) which are spaced apart from one another and extend between the first flat side and second flat side,
wherein the plate (71) has, on the first flat side, a first hollow rod (74), of which the opening is aligned with the first opening (72), and
wherein the plate (71) has, on the second flat side, a second hollow rod (75), of which the opening is aligned with the second opening (73),
wherein the first hollow rod (74) forms a right angle with the first flat side; and
wherein the second hollow rod (75) forms a minimum angle of between 60° and 80° or of 70° with the second flat side,
the method comprising the steps of:
- bonding insulating material (2) to a supporting structure (4);
- introducing between two and eight bores of the first type (B1) per square metre through the insulating material (2) into the supporting structure (4), wherein the bores of the first type (B1) are oriented perpendicularly to the supporting structure (4) and are arranged along the circumferential line of a circle or polygon or regular polygon or regular convex polygon;
- introducing a bore of the second type (B2) per square metre through the insulating material (2) into the supporting structure (4), wherein the bore of the second type (B2) is oriented perpendicularly to the supporting structure (4) and is arranged in the region of the centre of area of the circle or polygon, along the circumferential line of which the bores of the first type (B1) are arranged;
- screwing straight rods (51, 56, 61) in the bores of a first and second type (B1, B2) in the supporting structure (4);
- fitting the first hollow rod (74) of the auxiliary means (7) over the rod (51) screwed in the bore of the second type (B2) in such a way that the second opening (73) with the second hollow rod (75) is arranged vertically below or above the first opening (72) with the first hollow rod (74) and the second hollow rod (75) is arranged on the flat side of the auxiliary means (7) facing away from the insulating material (2),
- introducing a bore of the third type (B3) per square metre through the insulating material (2) into the supporting structure (4) by using the second hollow rod (75) as a guide for a drill bit such that the bore of the third type (B3) forms a minimum angle of between 60° and 80° or of 70° with the supporting structure (4);
- screwing straight rods (56) in the bores of the third type (B3) in the supporting structure (4);
- connecting the first base bodies (55) in a force-fitting manner to the rods (51, 56) which are allocated to the bores of the second and third type (B2, B3);
- applying a first layer of reinforcement mortar (32) to the insulating material (2), wherein the layer thickness of the first layer is at least 5 mm;
- arranging a reinforcement fabric (31) adjacent to the still fresh reinforcement mortar (32) and fastening the reinforcement fabric (31) in a force-fitting manner to the anchors of the first type (A1) using rigid second base bodies (58), wherein the second base bodies (58) are planar, and have an opening (581) which is allocated to the first rod (51) and to the anchors of the second type (A2);
and
- applying a second layer of reinforcement mortar (32) to the reinforcement fabric (31) and the still fresh first layer of reinforcement mortar (32), wherein the layer thickness of the second layer is at least 5 mm.

12. Method as claimed in claim 11, further comprising bonding a ceramic covering (33) to the second layer of reinforcement mortar (32) after the reinforcement mortar (32) has hardened.

## Revendications

1. Système composite d'isolation thermique (1), présentant :
un matériau d'isolation (2),
un revêtement (3) et
des moyens de fixation (41-47, 51-54),
dans lequel les moyens de fixation (51-58, 61-68) sont conçus pour fixer le revêtement (3) à une structure porteuse (4) d'un bâtiment de telle sorte que le matériau d'isolation (2) est disposé entre le revêtement (3) et la structure porteuse (4) à l'extérieur du bâtiment,
dans lequel les moyens de fixation (51-58, 61-68) comprennent des ancrages d'un premier type (A1),
dans lequel chaque ancrage du premier type (A1) comprend un premier corps de base (55) rigide et deux barres droites (51, 56),
dans lequel le premier corps de base (55) présente, dans une première section plane (551), une première ouverture (553) qui est associée à une première barre (51) des deux barres (51, 56), dans lequel le premier corps de base (55) présente, dans une seconde section plane (552), une deuxième ouverture (554) qui est associée à une deuxième barre (56) des deux barres (51, 56), et dans lequel les normales à la surface de la première section plane (551) et de la seconde section plane (552) du premier corps de base (55) forment entre elles un angle compris entre 10 ° et 30 ° ou entre 15 ° et 25 ° ou de 20 °, en sorte que le corps de base (55) présente en section transversale un tracé coudé,
dans lequel l'ancrage du premier type (A1) présente en outre un deuxième corps de base (58) rigide, dans lequel le deuxième corps de base (58) est plan et présente une ouverture (581) associée à la première barre (51).

2. Système composite d'isolation thermique (1) selon la revendication 1,
dans lequel les moyens de fixation (51-58, 61-68) comprennent des ancrages d'un second type (A2),
dans lequel chaque ancre du second type (A2) comprend un troisième corps de base (68) rigide et une troisième barre droite (61), et
dans lequel le troisième corps de base (68) est plan et présente une ouverture (681) associée à la troisième barre (61).

3. Système composite d'isolation thermique (1) selon la revendication 1 ou 2, dans lequel les moyens de fixation (51-58, 61-68) comprennent, par mètre carré de surface de revêtement, des ancrages du premier type (A1) et des ancrages du second type (A2) dans une proportion telle que, pour chaque ancrage du premier type (A1), entre deux et huit ancrages du second type (A2) ou, pour chaque ancrage du premier type (A1), entre trois et cinq ancrages du second type (A2) ou, pour chaque ancrage du premier type (A1), quatre ancrages du second type (A2) sont présents.

4. Système composite d'isolation thermique (1) selon l'une des revendications 1 à 3, dans lequel les corps de base (55, 58, 68) des ancrages du premier et/ou du second type (A1, A2) peuvent être reliés par liaison à force aux barres (51, 56, 61) guidées à travers les ouvertures (553, 554, 581, 681) respectives.

5. Système composite d'isolation thermique (1) selon l'une des revendications 1 à 4, dans lequel le revêtement (3) comprend un tissu d'armature (31) formé en particulier de fibres de verre ou de fibres de carbone,
dans lequel le tissu d'armature (31) peut être relié par liaison à force aux ancrages du premier et du second type (A1, A2).

6. Système composite d'isolation thermique (1) selon la revendication 5,
dans lequel les moyens de fixation (51-58, 61-68) comprennent en outre des rondelles (54, 64) et des vis ou des écrous (52, 62),
dans lequel un diamètre des rondelles (54, 64) est respectivement supérieur à une largeur de maille du tissu d'armature (31), et
dans lequel une rondelle (54, 64) peut être fixée respectivement à l'aide d'une vis ou d'un écrou (52, 62) à un ancrage (A1, A2) correspondant de telle sorte que le tissu d'armature (31) est disposé entre l'ancrage et la rondelle (54, 64).

7. Système composite d'isolation thermique (1) selon la revendication 5 ou 6, dans lequel le revêtement comprend en outre un mortier d'armature (32), dans lequel le tissu d'armature (31) est incorporé dans le mortier d'armature (32), et dans lequel une épaisseur de couche du mortier d'armature (32) est comprise entre 5 mm et 30 mm ou entre 10 mm et 25 mm ou entre 15 mm et 20 mm.

8. Système composite d'isolation thermique (1) selon la revendication 7,
dans lequel le revêtement comprend en outre une couche céramique (33),
dans lequel la couche céramique (33) est collée au mortier d'armature (32) après un durcissement de celui-ci, de telle sorte que le mortier d'armature (32) est disposé entre la couche céramique (33) et le matériau d'isolation (2).

9. Façade comportant un système composite d'isolation thermique (1) selon l'une quelconque des revendications 1 à 8,
dans laquelle le matériau d'isolation (2) est collé à une structure porteuse (4), dans laquelle un groupe d'ancrages du second type (A2) est disposé par mètre carré de surface de façade le long de la ligne périphérique d'un cercle ou d'un polygone ou d'un polygone régulier ou d'un polygone convexe régulier et est relié par liaison à force à la structure porteuse (4), et
dans laquelle un ancrage du premier type (A1) est disposé par mètre carré de surface de façade au centre de gravité de la surface du cercle ou du polygone le long de la ligne périphérique duquel sont disposés les ancrages du second type, et est relié par liaison à force à la structure porteuse (4).

10. Façade selon la revendication 9,
dans laquelle des ancrages du second type (A2) voisins les uns des autres sont espacés dans la direction horizontale et/ou dans la direction verticale d'une distance comprise entre 20 cm et 80 cm ou d'une distance comprise entre 40 cm et 60 cm ou d'une distance de 50 cm; et/ou
dans laquelle des ancrages du premier type (A1) voisins les uns des autres sont espacés dans la direction horizontale et/ou dans la direction verticale d'une distance comprise entre 70 cm et 130 cm ou d'une distance comprise entre 90 cm et 110 cm ou d'une distance de 100 cm.

11. Procédé permettant la fabrication d'une façade selon l'une des revendications 9 ou 10 à l'aide d'un moyen auxiliaire (7) permettant la création d'une façade, le moyen auxiliaire (7) présentant:
une plaque (71) comportant une première face plate et une seconde face plate opposée à la première face plate,
dans lequel la plaque (71) présente deux première et deuxième ouvertures (72, 73) espacées l'une de l'autre, qui s'étendent entre les première et seconde faces plates,
dans lequel la plaque (71) présente, sur la première face plate, une première barre creuse (74) dont l'ouverture est alignée avec la première ouverture (72), et dans lequel la plaque (71) présente, sur la seconde face plate, une deuxième barre creuse (75) dont l'ouverture est alignée avec la seconde ouverture (73), dans lequel la première barre creuse (74) forme un angle droit avec la première face plate, et
dans lequel la deuxième barre creuse (75) forme avec la seconde face plate un angle minimal compris entre 60° et 80° ou de 70°,
le procédé présentant les étapes suivantes:
- collage d'un matériau d'isolation (2) sur une structure porteuse (4);
- mise en place d'entre deux et huit alésages de première sorte (B1) par mètre carré à travers le matériau d'isolation (2) dans la structure porteuse (4), dans lequel les alésages de première sorte (B1) sont orientés perpendiculairement à la structure porteuse (4) et sont disposés le long de la ligne périphérique d'un cercle ou d'un polygone ou d'un polygone régulier ou d'un polygone convexe régulier;
- mise en place d'un alésage de deuxième sorte (B2) par mètre carré à travers le matériau d'isolation (2) dans la structure porteuse (4), dans lequel l'alésage de deuxième sorte (B2) est orienté perpendiculairement à la structure porteuse (4) et est disposé dans la zone du centre de gravité de la surface du cercle ou du polygone le long de la ligne périphérique duquel les alésages de première sorte (B1) sont disposés;
- vissage de barres droites (51, 56, 61) dans les alésages de première et de deuxième sorte (B1, B2) dans la structure porteuse (4);
- emboîtement de la première barre creuse (74) du moyen auxiliaire (7) au-dessus de la barre (51) vissée dans l'alésage de deuxième sorte (B2) de telle sorte que la seconde ouverture (73) avec la deuxième barre creuse (75) est disposée verticalement au-dessous ou au-dessus de la première ouverture (72) avec la première barre creuse (74) et que la deuxième barre creuse (75) est disposée sur la face plate d moyen auxiliaire (7) opposée au matériau d'isolation (2),
- mise en place d'un alésage de troisième sorte (B3) par mètre carré à travers le matériau d'isolation (2) dans la structure porteuse (4) à l'aide de la deuxième barre creuse (75) comme guide pour un foret, de sorte que l'alésage de troisième sorte (B3) forme un angle minimum avec la structure porteuse (4) compris entre 60° et 80° ou de 70°;
- vissage de barres droites (56) dans les alésages de troisième sorte (B3) dans la structure porteuse (4);
- liaison par liaison à force des premiers corps de base (55) avec les barres (51, 56) qui sont associées aux alésages de deuxième et troisième sortes (B2, B3);
- application d'une première couche de mortier d'armature (32) sur le matériau d'isolation (2), dans lequel l'épaisseur de la première couche est d'au moins 5 mm;
- agencement d'un tissu d'armature (31) adjacent au mortier d'armature (32) encore frais et fixation par liaison à force du tissu d'armature (31) aux ancrages du premier type (A1) à l'aide des deuxièmes corps de base (58) rigides, dans lequel les deuxièmes corps de base (58) sont plats et présentant une ouverture (581) associée à la première barre (51), et aux ancrages du second type (A2); et
- application d'une seconde couche de mortier d'armature (32) sur le tissu d'armature (31) et la première couche de mortier d'armature (32) encore fraîche, dans lequel l'épaisseur de la seconde couche est d'au moins 5 mm.

12. Procédé selon la revendication 11, comprenant en outre un collage d'une couche céramique (33) à la seconde couche de mortier d'armature (32) après le durcissement du mortier d'armature (32).
